# EUROPEAN PATENT APPLICATION

(11) **EP 4 560 797 A1**
(43) Date of publication of application: **28.05.2025**
(21) Application number: 22955323.5
(22) Date of filing: 18.08.2022
(51) Int. Cl.: H01M 50/14

(54) **BATTERY BOX BODY, BATTERY AND VEHICLE**

(71) Applicant: Contemporary Amperex Technology Co., Limited, Ningde, Fujian 352100 (CN)
(72) Inventor: HE, Runyong, Ningde, Fujian 352100 (CN); CHEN, Xingdi, Ningde, Fujian 352100 (CN); WANG, Peng, Ningde, Fujian 352100 (CN)
(74) Representative: Gong, Jinping
(86) International application number: PCT/CN2022/113171
(87) International publication number: WO 2024/036542

(57) **Abstract**

The present application discloses a battery box (21), a battery (20), and a vehicle (10). The battery box (21) comprises a box body (300), a bearing plate (100), and a reinforcing member (200), wherein the box body (300) is configured to accommodate a battery cell (22) therein, the box body (300) is arranged on one side of the bearing plate (100); and the reinforcing member (200) is fixed to one side of the bearing plate (100) away from the box body (300). The battery (20) comprises a battery cell (22) and above battery box (21), wherein the battery cell (22) is accommodated in the battery box (21). The vehicle (10) comprises above battery (20). In above battery box (21), battery (20) and vehicle (10), by arranging the reinforcing member (200) on the bearing plate (100), the rigidity of the bearing plate (100) can be locally enhanced, thereby enhancing the impact resistance of the battery box (21).

## Description

### TECHNICAL FIELD

The present application relates to the technical field of batteries, and more specifically relates to a battery box, a battery, and a vehicle.

### BACKGROUND

In some cases, a bearing plate of a battery box is often designed to have insufficient rigidity. When a vehicle undergoes a collision or shake during running, the bearing plate lacks essential rigidity and strength, and the battery box has poor impact resistance, so that the battery cell inside the battery box is damaged, thus affecting normal use of the battery cell.

### SUMMARY OF THE INVENTION

In view of this, the present application discloses a battery box, a battery, and a vehicle.

A battery box comprises a box body, a bearing plate, and a reinforcing member. The box body is configured to accommodate a battery cell therein, the box body is arranged on one side of the bearing plate, and the reinforcing member is fixed to one side of the bearing plate away from the box body. By arranging the reinforcing member on the bearing plate, the above battery box can locally enhance rigidity of the bearing plate, and enhance impact resistance of the battery box.

In some embodiments, the reinforcing member has a first protruding portion protruding along a direction away from one side of the bearing plate, and a cavity is formed between the first protruding portion and the bearing plate. In this way, a cavity is formed between the reinforcing member and the bearing plate, and when the battery box is impacted, the cavity can absorb the impact energy, thereby providing a better buffering effect on the bearing plate, and improving the impact resistance of the bearing plate.

In some embodiments, depth of the cavity is larger than or equal to 1.5 times the thickness of the bearing plate. In this way, by controlling the magnitude of the depth of the cavity, the depth of the cavity is in an optimal range, which can have a buffering effect on the bearing plate without occupying too much space on one side of the bearing plate in the thickness direction.

In some embodiments, the reinforcing member has at least two first protruding portions, and all of the first protruding portions are spaced apart side by side. In this way, the buffering effect of the reinforcing member on the bearing plate can be further enhanced.

In some embodiments, all of the first protruding portions are strip-shaped with an equal size. In this way, it is convenient for batch processing of the first protruding portions on the reinforcing member, and is conducive to improving the production efficiency.

In some embodiments, the reinforcing member further comprises a reinforcing body connected to the first protruding portion, and thickness of the reinforcing body ranges from 0.6 mm to 2 mm. In this way, by controlling the thickness of the reinforcing body, the thickness of the reinforcing member is in an optimal range, which can have a reinforcing effect on the bearing plate without occupying too much space on one side of the bearing plate in the thickness direction.

In some embodiments, the number of reinforcing members is at least two, and all of the reinforcing members are laminated on one side of the bearing plate away from the box body. In this way, the rigidity of the bearing plate can be locally enhanced, and the reinforcing effect on the bearing plate can be further enhanced.

In some embodiments, the reinforcing member is detachably connected to the bearing plate. In this way, it is convenient for rapid disassembly and assembly of the reinforcing member, and is conducive to user operations.

In some embodiments, the thickness of the bearing plate ranges from 0.6 mm to 3 mm. In this way, by controlling the thickness of the bearing plate, the thickness of the bearing plate is in an optimal range, which can effectively resist impact without occupying too much space in the thickness direction of the vehicle.

In some embodiments, the bearing plate has a second protruding portion protruding along a direction away from one side of the bearing plate. In this way, the buffering effect of the bearing plate on ground impact can be further enhanced.

In some embodiments, the battery box is used in the vehicle, the battery box has a first cantilever connected to a front axle of the vehicle and a second cantilever connected to a rear axle of the vehicle, the bearing plate is arranged between the first cantilever and the second cantilever, and the reinforcing member is arranged close to the second cantilever. In this way, the strength of a part of the bearing plate close to the rear axle of the vehicle can be locally enhanced, and the impact resistance of the vehicle body can be further enhanced.

A battery comprises a battery cell and the above battery box, wherein the battery cell is accommodated in the battery box. In the above battery, a bearing plate of the battery box is provided with a reinforcing member, which locally enhances rigidity of the bearing plate and enhances impact resistance of the bearing plate.

A vehicle comprises the above battery. In the above vehicle, the battery has good impact resistance.

### BRIEF DESCRIPTION OF DRAWINGS

In order to more clearly describe technical solutions of embodiments of the present application or the prior art, drawings to be used in the description of the embodiments or the prior art will be briefly introduced below. Apparently, the drawings described below are merely the embodiments of the present application. For those of ordinary skills in the art, other drawings may also be obtained based on the disclosed drawings without creative work.
FIG. 1 is a schematic diagram of a vehicle provided in an embodiment of the present application;
FIG. 2 is a top view of a combination of a bearing plate and a reinforcing member provided in an embodiment of the present application;
FIG. 3 is a partial section view of FIG. 2;
FIG. 4 is a schematic diagram of the bearing plate and the reinforcing member in a battery box shown in FIG. 2; and
FIG. 5 is a schematic diagram of a battery box shown in FIG. 2.

### Reference numerals:

10. vehicle; 11. controller; 12. motor; 13. first cantilever; 14. second cantilever; 20. battery; 21. battery box; 22. battery cell; 100. bearing plate; 110. second protruding portion; 200. reinforcing member; 201. cavity; 210. first protruding portion; 220. reinforcing body; 300. box body; 310. first part; 320. second part.

### DETAILED DESCRIPTION

To make the above objects, features, and advantages of the present application more obvious and understandable, specific embodiments of the present application are described in detail below with reference to the drawings. In the following description, numerous specific details are set forth to facilitate thorough understanding of the present application. However, the present application can be implemented in many other ways different from those described herein. Those skilled in the art can make similar improvements without violation from the connotation of the present application. Therefore, the present application is not limited to the specific embodiments disclosed below.

In the description of the present application, it should be understood that the directions or positional relationships indicated by the terms, such as "center," "longitudinal," "transverse," "length," "width," "thickness," "above," "below," "front," "back," "left," "right," "vertical," "horizontal," "top," "bottom," "inner," "outer," "clockwise," "counterclockwise," "axial," "radial," and "circumferential," are based on the directions or positional relationships shown in the drawings, are only provided to facilitate describing the present application and simplifying the description, rather than indicating or implying that the apparatus or element referred to must have a particular direction, or be configured and operated in a particular direction, and therefore cannot be construed as limiting the present application.

In addition, the terms "first" and "second" are used for descriptive purposes only, and cannot be construed as indicating or implying relative importance or implicitly indicating the number of technical features indicated. Therefore, a feature defined by "first" or "second" may expressly or implicitly include at least one of the features. In the description of the present application, the meaning of "a plurality of" is at least two, for example two or three, unless otherwise explicitly and specifically defined.

In the present application, unless otherwise expressly specified and limited, the terms "mount," "link," "connect" and "fix" should be broadly understood, for example, they may be a fixed connection or a detachable connection or be integrated; or may be a mechanical connection or an electrical connection; or may be a direct connection or an indirect connection through an intermediate medium, or may be a communication between the interior of two elements or the interaction of two elements, unless otherwise specifically defined. For those of ordinary skill in the art, the specific meanings of the above terms in the present application can be understood according to specific situations.

In the present application, unless otherwise explicitly specified and defined, the expression a first feature being "on" or "under" a second feature may be the case that the first feature is in direct contact with the second feature, or the first feature is in indirect contact with the second feature via an intermediate medium. Furthermore, the expression the first feature being "over," "above" and "on top of" the second feature may be a case that the first feature is directly above or obliquely above the second feature, or only means that the level of the first feature is higher than that of the second feature. The expression the first feature being "below," "underneath" or "under" the second feature may be a case that the first feature is directly underneath or obliquely underneath the second feature, or only means that the level of the first feature is lower than that of the second feature.

It should be noted that when an element is referred to as "fixed to" or "arranged to" another element, it may be directly on the other element or there may be an intermediate element. When one element is considered to be "connected" to another element, it may be directly connected to another element or there may also be an intermediate element. The terms of "vertical," "horizontal," "above," "below," "left," and "right," and similar expressions used herein are for illustrative purposes only, and do not represent sole embodiments.

With the popularization and promotion of new-energy vehicles, charging and discharging performance and range of the new-energy vehicles have increasingly attracted people's attention. As a rechargeable battery, a power battery is a power source of the new-energy vehicles, and is widely used in the field of new-energy vehicles.

A battery box is used in a vehicle. In some cases, a bearing plate of the battery box is often designed to have insufficient rigidity, the bearing plate lacks essential rigidity and strength, and the battery box has poor impact resistance, so that the battery cell inside the battery box is damaged, thus affecting normal use of the battery cell.

Based on the above considerations, after in-depth researches, a battery box, a battery, and a vehicle are designed. In the battery box, a cavity is formed between a reinforcing member and a bearing plate, and when the battery box is impacted, the cavity can absorb the impact energy, thereby providing a better buffering effect on the bearing plate, and improving the impact resistance of the bearing plate.

An embodiment of the present application provides an electrical device using a battery as a power source. The electrical device may be, but is not limited to, a mobile phone, a tablet, a laptop, an electric toy, an electric tool, a battery cart, an electric vehicle, a ship, a spacecraft, and the like. The electric toy may include a stationary or mobile electric toy, such as a game machine, an electric car toy, an electric ship toy, or an electric airplane toy, and the spacecraft may include an airplane, a rocket, an aerospace plane, a spaceship, and the like.

For ease of description, the following embodiments are illustrated when an electrical device in an embodiment of the present application is, for example, a vehicle 10.

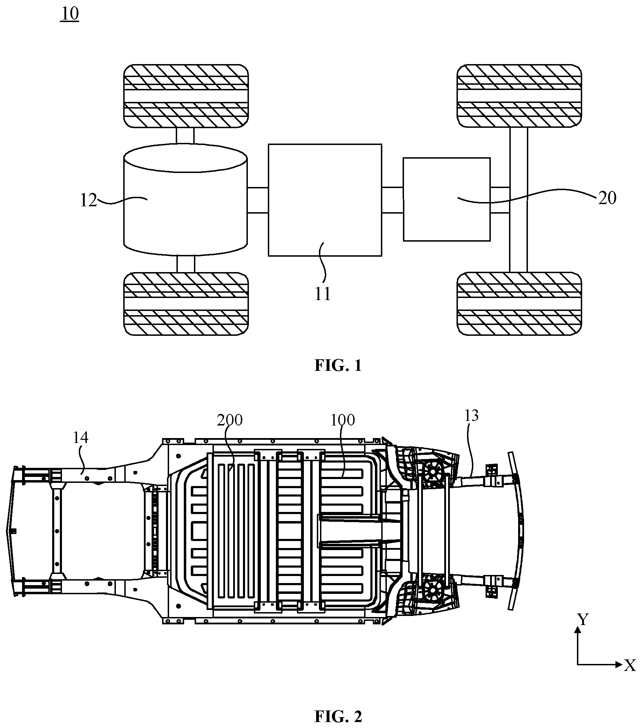

Referring to FIG. 1, FIG. 1 is a schematic structural diagram of a vehicle 10 provided in some embodiments of the present application. The vehicle 10 may be a fuel vehicle, a gas vehicle or a new-energy vehicle. The new-energy vehicle may be, e.g., an all-electric vehicle, a hybrid vehicle, or an extended range electric vehicle. A battery 20 is provided in the vehicle 10. The battery 20 may be arranged at the bottom or head or tail of the vehicle 10. The battery 20 may be configured to power the vehicle 10, for example, the battery 20 may serve as an operating power source for the vehicle 10. The vehicle 10 may further comprise a controller 11 and a motor 12. The controller 11 is configured to control the battery 20 to supply power to the motor 12, for example, serve to satisfy operating power demand when the vehicle 10 is starting, navigating, and running. **In** some other embodiments of the present application, the battery 20 not only can serve as an operating power source of the vehicle 10, but also can serve as a driving power source of the vehicle 10, to provide driving power for the vehicle 10 in place of or partially in place of fuel or natural gas.

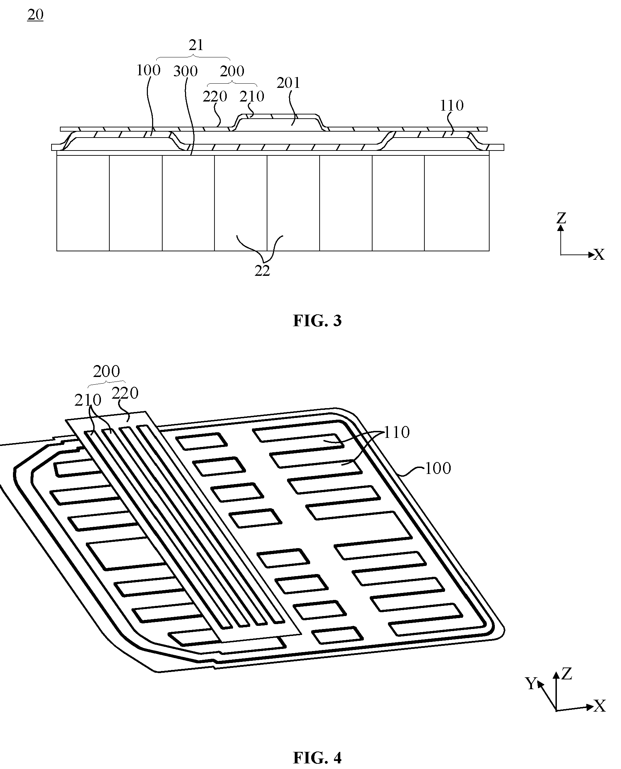

Referring to FIGS. 2 and 3, a battery box 21 in an embodiment comprises a box body 300, a bearing plate 100, and a reinforcing member 200. The box body 300 is configured to accommodate a battery cell 22, the box body 300 is arranged on one side of the bearing plate 100, and the reinforcing member 200 is fixed to one side of the bearing plate 100 away from the box body 300.

**In** some embodiments of the present application, the bearing plate 100 is a part of the battery box 21, and has a bearing effect. The bearing plate 100 may be made of a metal material, such as steel or aluminum, and has high mechanical strength and good carrier performance.

In some embodiments of the present application, the reinforcing member 200 is a component fixed to one side of the bearing plate 100, and has a reinforcing effect and a buffering effect on the bearing plate 100. The reinforcing member 200 may be made of a metal material, such as steel or aluminum, or a non-metallic composite material.

By arranging the reinforcing member 200 on the bearing plate 100, the above battery box 21 can locally enhance rigidity of the bearing plate 100, and enhance impact resistance of the battery box 21.

According to some embodiments of the present application, referring to FIGS. 2 and 3, the reinforcing member 200 has a first protruding portion 210 protruding along a direction away from one side of the bearing plate 100, and a cavity 201 is formed between the first protruding portion 210 and the bearing plate 100.

Here, the direction away from one side of the bearing plate 100 is also the Z direction shown in FIG. 3.

In some embodiments of the present application, the first protruding portion 210 is formed by punching a reinforcing body 220 of the reinforcing member 200 along a direction away from one side of the bearing plate 100.

In some embodiments of the present application, the cavity 201 may be a cylinder, a V-shape, or other shape, and the shape of the cavity 201 is not specifically limited here.

Through the above arrangements, the cavity 201 is formed between the reinforcing member 200 and the bearing plate 100, and when the battery box 21 is impacted, the cavity 201 can absorb the impact energy, thereby providing a better buffering effect on the bearing plate 100, and improving the impact resistance of the bearing plate 100.

According to some embodiments of the present application, referring to FIG. 3, depth of the cavity 201 is larger than or equal to 1.5 times the thickness of the bearing plate 100.

Here, both the depth direction and the thickness direction are the Z direction shown in FIG. 4.

It is understandable that when the depth of the cavity 201 is too small, the cavity 201 has an unapparent buffering effect on the bearing plate 100; and when the depth of the cavity 201 is too large, it can occupy space on one side of the bearing plate 100 in the thickness direction.

Through the above arrangements, by controlling the magnitude of the depth of the cavity 201, the depth of the cavity 201 is in an optimal range, which can have a buffering effect on the bearing plate 100 without occupying too much space on one side of the bearing plate 100 in the thickness direction.

According to some embodiments of the present application, referring to FIG. 3, the reinforcing member 200 has at least two first protruding portions 210, and all of the first protruding portions 210 are spaced apart side by side.

It should be noted that a cavity 201 is formed between each of the first protruding portions 210 and the bearing plate 100, and there is one-to-one correspondence between the number of the cavities 201 and the number of the first protruding portions 210.

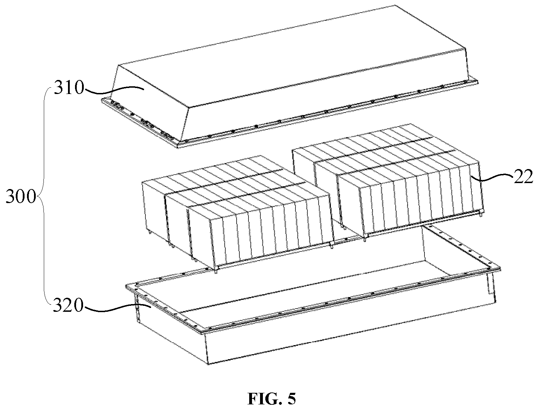

In this embodiment, all of the first protruding portions 210 are spaced apart side by side along a same direction. For example, as shown in FIG. 5, all of the first protruding portions 210 are spaced apart side by side along the X direction shown in FIG. 3. In other embodiments, all of the first protruding portions 210 may also be spaced apart side by side along at least two directions.

Through the above arrangements, the buffering effect of the reinforcing member 200 on the bearing plate 100 can be further enhanced.

According to some embodiments of the present application, referring to FIG. 4, all of the first protruding portions 210 are strip-shaped with an equal size.

It should be noted that, in other embodiments, shapes and sizes of all of the first protruding portions 210 may not be exactly the same, or may be completely different.

The above arrangements are convenient for batch processing of the first protruding portions 210 on the reinforcing member 200, and are conducive to improving the production efficiency.

According to some embodiments of the present application, referring to FIGS. 3 and 4, the reinforcing member 200 further comprises a reinforcing body 220 connected to the first protruding portion 210, and thickness of the reinforcing body 220 ranges from 0.6 mm to 2 mm.

It is understandable that if the thickness of the reinforcing body 220 is too small, the reinforcing member 200 has a poor reinforcing effect on the bearing plate 100; and if the thickness of the reinforcing body 220 is too large, it can occupy space on one side of the bearing plate 100 in the thickness direction.

In this embodiment, the reinforcing body 220 and the first protruding portion 210 are an integrally formed structure with good integrity and high mechanical strength.

Through the above arrangements, by controlling the thickness of the reinforcing body 220 of the reinforcing member 200, the thickness of the reinforcing body 220 of the reinforcing member 200 is in an optimal range, which can have a reinforcing effect on the bearing plate 100 without occupying too much space on one side of the bearing plate 100 in the thickness direction.

According to some embodiments of the present application, referring to FIG. 3, the number of the reinforcing members 200 is at least two, and all of the reinforcing members 200 are laminated on one side of the bearing plate 100.

In some embodiments of the present application, all of the reinforcing members 200 are laminated, that is, the reinforcing members 200 are stacked in the thickness direction, so as to reinforce the bearing plate 100 in the thickness direction.

In this embodiment, all of the reinforcing members 200 have a same shape and an equal size. As shown in FIG. 3, all of the reinforcing members 200 are rectangular with an equal size. In other embodiments, shapes and sizes of all of the reinforcing members 200 may not be exactly the same.

Through the above arrangements, the rigidity of the bearing plate 100 can be locally enhanced, and the reinforcing effect on the bearing plate 100 can be further enhanced.

According to some embodiments of the present application, referring to FIG. 3, the reinforcing member 200 is detachably connected to the bearing plate 100.

In some embodiments of the present application, the reinforcing member 200 can be detachably connected to one side of the bearing plate 100 by, e.g., screwing, gluing, or snap fit. It should be noted that, in other embodiments, the reinforcing member 200 may also be connected to one side of the bearing plate 100 in a non-detachable manner such as welding or riveting.

The above arrangements are convenient for rapid disassembly and assembly of the reinforcing member 200, and are conductive to user operations.

According to some embodiments of the present application, referring to FIG. 3, the thickness of the bearing plate 100 ranges from 0.6 mm to 3 mm.

It is understandable that, if the thickness of the bearing plate 100 is too small, the bearing plate 100 has poor rigidity and fails to effectively resist impact; and if the thickness of the bearing plate 100 is too large, it can occupy space in the thickness direction of the vehicle 10.

Through the above arrangements, by controlling the thickness of the bearing plate 100, the thickness of the bearing plate 100 is in an optimal range, which can effectively resist impact without occupying too much space in the thickness direction of the vehicle 10.

According to some embodiments of the present application, referring to FIG. 4, the bearing plate 100 has a second protruding portion 110 protruding along a direction away from one side of the bearing plate 100.

In this embodiment, all of the second protruding portions 110 are spaced apart side by side along a same direction. In other embodiments, all of the second protruding portions 110 may also be spaced apart side by side along at least two directions.

Through the above arrangements, the buffering effect of the bearing plate 100 on ground impact can be further enhanced.

According to some embodiments of the present application, referring to FIG. 2, the battery box 21 is used in the vehicle 10, the battery box 21 has a first cantilever 13 connected to a front axle of the vehicle 10 and a second cantilever 14 connected to a rear axle of the vehicle 10, the bearing plate 100 is arranged between the first cantilever 13 and the second cantilever 14, and the reinforcing member 200 is arranged close to the second cantilever 14.

In some embodiments of the present application, one side of the bearing plate 100 away from the box body 300 may be completely covered by one reinforcing member 200, or may be covered by a combination of a plurality of reinforcing members 200, and shapes of the plurality of reinforcing members 200 may be the same, or may not be exactly the same. Here, the second cantilever 14 connected to the rear axle is located in the middle-rear of the whole vehicle, that is, at a place with weak rigidity and a large impact force, and the reinforcing member 200 can have a reinforcing effect on this part of the bearing plate 100 to resist impact.

Through the above arrangements, the strength of a part of the bearing plate 100 close to the rear axle of the vehicle 10 can be locally enhanced, and the impact resistance of the vehicle body can be further enhanced.

Referring to FIGS. 3 and 5, a battery 20 in an embodiment comprises a battery cell 22 and the above battery box 21, wherein the battery cell 22 is accommodated in the battery box 21.

In some embodiments of the present application, the battery box 21 comprises a box body 200, the box body 200 may comprise a first part 310 and a second part 320, and the first part 310 is connected to the bearing plate 100. The first part 310 and the second part 320 cover each other, and the first part 310 and the second part 320 jointly define an accommodating space for accommodating the battery cell 22. The second part 320 may be a hollow structure with one opening end, the first part 310 may be a platy structure, and the first part 310 covers on the opening side of the second part 21b, such that the first part 310 and the second part 320 jointly define an accommodating space; or the first part 310 and the second part 320 each may be a hollow structure with one opening side, and the opening side of the first part 310 covers on the opening side of the second part 320. Of course, the box body 200 formed by the first part 310 and the second part 320 may be various shapes, such as a cylinder and a cuboid.

In the battery 20, there may be a plurality of battery cells 22, and there may be series connection, or parallel connection, or parallel-series connection between the plurality of battery cells 22. The parallel-series connection means that there are both series connection and parallel connection between the plurality of battery cells 22. The plurality of battery cells 22 can be connected directly by series connection or parallel connection or parallel-series connection, and then the entirety formed by the plurality of battery cells 22 is accommodated in the battery box 21. Of course, the battery 20 may also be an entirety formed by series connection or parallel connection or parallel-series connection of a plurality of battery modules that are formed by series connection or parallel connection or parallel-series connection of the plurality of battery cells 22, and is accommodated in the battery box 21.

Each of the battery cells 22 may be a secondary battery or a primary battery; or may be, but is not limited to, a lithium-sulfur battery, a sodium ion battery, or a magnesium ion battery. The battery cell 22 may be a cylinder, a flat body, a cuboid, or other shape. In the present application, the battery cell 22 may comprise, e.g., a lithium-ion secondary battery, a lithium-ion primary battery, a lithium-sulfur battery, or a sodium/lithium-ion battery, a sodium-ion battery, or a magnesium-ion battery, which is not limited in the embodiments of the present application. The battery cell 22 may be, e.g., a cylinder, a flat body, a cuboid, or other shape, which is not limited in the embodiments of the present application.

In the above battery 20, the bearing plate 100 of the battery box 21 is provided with the reinforcing member 200, which locally enhances the rigidity of the bearing plate 100, and enhances impact resistance of the bearing plate 100.

Referring to FIG. 1, a vehicle 10 in an embodiment comprises a battery 20.

In some embodiments of the present application, the battery 20 may be a secondary battery 20 or a primary battery 20; or may be, but is not limited to, a lithium-sulfur battery 20, a sodium-ion battery 20, or a magnesium-ion battery 20.

In the above vehicle 10, the battery 20 has good impact resistance.

According to some embodiments of the present application, referring to FIGS. 3-5, in a battery box 21 of an embodiment, the battery box 21 comprises a box body 300, a bearing plate 100, and a reinforcing member 200. The box body 300 is configured to accommodate a battery cell 22, the box body 300 is arranged on one side of the bearing plate 100, and the reinforcing member 200 is fixed to one side of the bearing plate 100 away from the box body 300.

The reinforcing member 200 has at least two first protruding portions 210 protruding along a direction away from one side of the bearing plate 100. A cavity 201 is formed between each of the first protruding portions 210 and the bearing plate 100. The depth of each cavity 201 is larger than or equal to 1.5 times the thickness of the bearing plate 100. All of the first protruding portions 210 are spaced apart side by side. All of the first protruding portions 210 are strip-shaped with an equal size. The reinforcing member 200 further comprises a reinforcing body 220 connected to the first protruding portion 210, and the thickness of the reinforcing body 220 ranges from 0.6 mm to 2 mm. The thickness of the bearing plate 100 ranges from 0.6 mm to 3 mm, and the bearing plate 100 has a second protruding portion protruding along a direction away from one side of the bearing plate 100.

According to some embodiments of the present application, referring to FIGS. 3 and 5, a battery 20 in an embodiment comprises a battery cell 22 and the above battery box 21, wherein the battery cell 22 is accommodated in the battery box 21.

According to some embodiments of the present application, referring to FIG. 1, a vehicle 10 in an embodiment comprises the above battery 20.

The above embodiments merely represent some embodiments of the present application, giving specifics and details thereof, but should not be construed as limiting the scope of the patent application thereby. It should be noted that those of ordinary skill in the art may further make variations and improvements without departing from the concept of the present application, all of which fall within the scope of protection of the present application. Therefore, the scope of protection of the present application should be determined by the appended claims.

## Claims

1. A battery box (21), comprising:
a box body (300) configured to accommodate a battery cell (22) therein;
a bearing plate (100), the box body (300) being arranged on one side of the bearing plate (100); and
a reinforcing member (200) fixed to one side of the bearing plate (100) away from the box body (300).

2. The battery box (21) according to claim 1, wherein the reinforcing member (200) has a first protruding portion (210) protruding along a direction away from one side of the bearing plate (100), and a cavity (201) is formed between the first protruding portion (210) and the bearing plate (100).

3. The battery box (21) according to claim 2, wherein the depth of the cavity (201) is larger than or equal to 1.5 times the thickness of the bearing plate (100).

4. The battery box (21) according to claim 2, wherein the reinforcing member (200) has at least two first protruding portions (210), and all of the first protruding portions (210) are spaced apart side by side.

5. The battery box (21) according to claim 4, wherein all of the first protruding portions (210) are strip-shaped with an equal size.

6. The battery box (21) according to claim 4, wherein the reinforcing member (200) further comprises a reinforcing body (220) connected to the first protruding portion (210), and the thickness of the reinforcing body (220) ranges from 0.6 mm to 2 mm.

7. The battery box (21) according to any one of claims 1-6, wherein the number of the reinforcing members (200) is at least two, and all of the reinforcing members (200) are laminated on one side of the bearing plate (100) away from the box body (300).

8. The battery box (21) according to any one of claims 1-6, wherein the reinforcing member (200) is detachably connected to the bearing plate (100).

9. The battery box (21) according to any one of claims 1-6, wherein the thickness of the bearing plate (100) ranges from 0.6 mm to 3 mm.

10. The battery box (21) according to any one of claims 1-6, wherein the bearing plate (100) has a second protruding portion (110) protruding along a direction away from one side of the bearing plate (100).

11. The battery box (21) according to any one of claims 1-6, wherein the battery box (21) is used in a vehicle (10), the battery box (21) has a first cantilever (13) connected to a front axle of the vehicle (10) and a second cantilever (14) connected to a rear axle of the vehicle (10), the bearing plate (100) is arranged between the first cantilever (13) and the second cantilever (14), and the reinforcing member (200) is arranged close to the second cantilever (14).

12. A battery (20), comprising a battery cell (22) and the battery box (21) according to any one of claims 1-11, the battery cell (22) being accommodated in the battery box (21).

13. A vehicle (10), comprising the battery (20) according to claim 12.
